Europäisches Patentamt

European Patent Office

Office européen des brevets

(11) Publication number: **0 426 140 B1**

(12) **EUROPEAN PATENT SPECIFICATION**

(45) Date of publication of patent specification: **05.04.95**　(51) Int. Cl.6: **C08F 210/06**, C08F 2/34, C08F 4/646

(21) Application number: **90120847.0**

(22) Date of filing: **30.10.90**

(54) **Process for the preparation of random copolymers.**

(30) Priority: **31.10.89 US 429616**

(43) Date of publication of application:
**08.05.91 Bulletin 91/19**

(45) Publication of the grant of the patent:
**05.04.95 Bulletin 95/14**

(84) Designated Contracting States:
**AT BE CH DE DK ES FR GB GR IT LI LU NL SE**

(56) References cited:
**EP-A- 0 291 958**
**GB-A- 2 052 532**

(73) Proprietor: **UNION CARBIDE CHEMICALS AND PLASTICS COMPANY, INC.**
**39 Old Ridgebury Road**
**Danbury**
**Connecticut 06817-0001 (US)**

(72) Inventor: **Ficker, Harold K.**
**16 Adelphia Road**
**Wayne,**
**New Jersey 07470 (US)**
Inventor: **Twu, Fred Chun-Chien**
**1150 Emerald Road**
**Charleston,**
**West Virginia 25314 (US)**
Inventor: **Liu, Han Tai**
**14 Cornell Trail**
**Belle Mead,**
**New Jersey 08502 (US)**

(74) Representative: **Barz, Peter, Dr. et al**
**Patentanwälte Dipl.-Ing. G. Dannenberg**
**Dr. P. Weinhold, Dr. D. Gudel**
**Dipl.-Ing. S. Schubert, Dr. P. Barz**
**Siegfriedstrasse 8**
**D-80803 München (DE)**

**Description**

This invention relates to a process for the preparation of random copolymers of propylene and 1-hexene.

Random copolymers of propylene and 1-hexene and block copolymers which comprise a random copolymer block of propylene and 1-hexene and a propylene homopolymer block are disclosed in GB-A-2052532.

In EP-A-291 958 a process is provided for producing stereo regular polymers. More particularly, it was found that polymers having an isotactic index of at least 96 percent could be prepared in high yield at high production rates by polymerizing an alpha-olefin in a low pressure gas phase fluidized bed process at temperatures in excess of 50°C employing a catalyst system comprising (i) a solid catalyst precursor, which includes magnesium, titanium, halogen, and an inner electron donor, i.e., a polycarboxylic acid ester containing two coplanar ester groups attached to adjacent carbon atoms; (ii) a hydrocarbylaluminum cocatalyst; and (iii) an outer electron donor or selectivity control agent, i.e., a silicon compound containing a silicon-oxygen-carbon linkage wherein the atomic ratio of aluminum to silicon is in the range of 0.5:1 to 100:1 and the atomic ratio of aluminum to titanium is in the range of 5:1 to 300:1.

The alpha-olefin copolymers provided by this process are random copolymers, which generally exhibit improved clarity, low temperature impact strength, and melt sealing characteristics. It would be advantageous, however, for certain applications, if one of these random copolymers could provide, in addition to the foregoing characteristics, the combination of flexibility and high melting point.

An object of this invention, therefore, is to provide a process for the preparation of a particular random copolymer, which provides the flexibility/high melting characteristics so important in, for example, heat sterilizable bags, flexible tubing for conveying hot liquids, and collapsible containers capable of holding hot solids or liquids.

According to the present invention, a process for the copolymerization of a mixture of monomers comprising propylene and 1-hexene has been discovered which comprises contacting the monomers and, optionally, hydrogen in the gas phase in a single stage reaction zone, under polymerization conditions, with a catalyst system comprising (i) a solid catalyst precursor, which includes magnesium; titanium; a halogen which is chlorine, bromine, or iodine, or a mixture thereof; and a polycarboxylic acid ester containing two coplanar ester groups attached to adjacent carbon atoms; (ii) a hydrocarbylaluminum cocatalyst; and (iii) a silicon compound containing at least one silicon-oxygen-carbon group, at a temperature of from 50°C to 90°C, wherein:

(a) the atomic ratio of aluminum to titanium is in the range of 10 to 300;
(b) the molar ratio of aluminum to silicon compound is in the range of 0.5 to 10;
(c) the propylene partial pressure is in the range of 344.75 to 2758 KPa (50 to 400 psi);
(d) the 1-hexene partial pressure is in the range of 6.9 to 103.4 KPa (1 to 15 psi);
(e) if hydrogen is present, the hydrogen partial pressure is in the range of up to about 552 KPa (80 psi);
(f) the superficial gas velocity is in the range of 0.305 to 0.915 m/sec (1 to 3 feet per second); and
(g) the molar ratio of 1-hexene to propylene is in the range of 0.01:1 to 0.08:1.

The solid catalyst precursor can be prepared by halogenating a magnesium compound of the formula MgRR' wherein R is an alkoxide or aryloxide group and R' is an alkoxide or aryloxide group or a halogen with a halogenated tetravalent titanium compound containing at least two halogen atoms in the presence of a halohydrocarbon and a polycarboxylic acid ester containing two coplanar ester groups attached to adjacent carbon atoms. The alkoxide groups can contain 1 to 8 carbon atoms and the aryloxide groups 6 to 10 carbon atoms. The halogen can be chlorine, bromine, or iodine.

Suitable magnesium compounds include magnesium diethoxide, magnesium diisopropoxide, magnesium di-n-butoxide, magnesium diphenoxide, magnesium dinaphthoxide, ethoxy magnesium isobutoxide, ethoxy magnesium phenoxide, naphthoxy magnesium isoamyloxide, ethoxy magnesium bromide, isobutoxy magnesium chloride, phenoxy magnesium iodide, cumyloxy magnesium bromide, and naphthoxy magnesium chloride.

The halogenated tetravalent titanium compound contains at least two halogen atoms and can have up to two alkoxy and/or aryloxy groups. Examples are $TiCl_4$, $TiBr_4$, diethoxy titanium dibromide, isopropoxy titanium triiodide, dihexoxy titanium dichloride, and phenoxy titanium trichloride.

The halohydrocarbon, while preferably aromatic, can be aliphatic or alicyclic. Suitable halohydrocarbons include chlorobenzene, bromobenzene, dichlorobenzene, dichlorodibromobenzene, chlorotoluene, dichlorotoluene, chloronaphthalene, dibromomethane, trichloromethane, 1,2-dichloroethane, trichloroethane, dichlorofluoroethane, hexachloroethane, trichloropropane, chlorobutane, dichlorobutane, chloropentane, trichlorofluorooctane, tetrachloroisooctane, dibromodifluorodecane, dibromocyclobutane, and trichlorocyclohexane.

The halogenated tetravalent titanium compound and the halohydrocarbon preferably contain no more than 12 carbon atoms.

Suitable polycarboxylic acid esters are characterized by a molecularly rigid structure wherein two ester groups are attached to adjacent carbon atoms of the molecule and lie in a single plane. Such esters include polycarboxylic acid esters containing two ester groups which are attached to (a) ortho carbon atoms of a monocyclic or polycyclic aromatic ring, each of said ester groups being further linked to a branched or unbranched chain hydrocarbon radical; (b) vicinal carbon atoms of a non-aromatic monocyclic or polycyclic ring and which lie in a syn configuration with respect to each other, each of said ester groups being further linked to a branched or unbranched chain hydrocarbon radical; or (c) vicinal double bonded carbon atoms of an unsaturated aliphatic compound and which lie in a syn configuration with respect to each other, each of said ester groups being further linked to a branched or unbranched chain hydrocarbon radical.

These polycarboxylic acid esters are derived from a suitable polycarboxylic acid and a monohydric alcohol having a linear hydrocarbon moiety which may be branched or unbranched. Examples of polycarboxylic acid esters are dimethyl phthalate, diethyl phthalate, di-n-propyl phthalate, diisopropyl phthalate, di-n-butyl phthalate, diisobutyl phthalate, di-tert-butyl phthalate, diisoamyl phthalate, di-tert-amyl phthalate, dineopentyl phthalate, di-2-ethylhexyl phthalate, di-2-ethyldecyl phthalate, diethyl-1,2-fluorenedicarboxylate, diisopropyl-1-,2-ferrocenedicarboxylate, cis-diisobutyl-cyclobutane-1,2-dicarboxylate, endo-diisobutyl-5-norbornene-2,3-dicarboxylate, and endo-diisobutyl-bicyclo[2.2.2]oct-5-ene-2, -3-dicarboxylate, diisobutyl maleate, and diisoamyl citraconate.

Halogenation of the magnesium compound is preferably effected employing an excess of titanium compound, 2 mols to 100 mols of titanium compound per mole of magnesium compound. The halohydrocarbon is employed in an amount sufficient to dissolve the titanium compound and the ester, and to adequately disperse the solid, insoluble magnesium compound. The magnesium compound can be used in an amount of 0.005 to 2.0 mols of magnesium compound per mol of halohydrocarbon and the ester in an amount of 0.0005 to 2.0 mols of ester per mol of titanium compound. The halogenation of the magnesium compound can be carried out in a temperature range of 60°C to 150°C over a period of 0.1 to 6 hours. The halogenated product is a solid material which can be isolated from the liquid reaction medium by filtration or decantation. After separation, it is treated one or more times with the titanium compound in the same molar ratio to remove residuals and maximize catalyst activity. The halohydrocarbon is usually employed during this treatment to dissolve the titanium compound and disperse the halogenated product. The treatment is preferably carried out twice, the second treatment being in the presence of a polycarboxylic acid halide containing two coplanar acid groups attached to adjacent carbon atoms. About 5 to 200 millimols of acid halide are generally employed per gram atom of magnesium. Suitable acid halides include phthaloyl dichloride, 2,3-naphthalene di-carboxylic acid dichloride, endo-5-norbornene-2,3-dicarboxylic acid dichloride, maleic acid dichloride, and citraconic acid dichloride.

After the solid halogenated product has been treated one or more times with additional halogenated tetravalent titanium compound, it is preferably separated from the liquid reaction medium, washed with an inert hydrocarbon to remove unreacted titanium compounds, and dried. The final washed product suitably has a titanium content of 0.5 to 6.0 percent by weight. The atomic ratio of titanium to magnesium in the final product is preferably in the range of 0.01:1 to 0.2:1. The polycarboxylic acid ester is preferably present in a molar ratio of ester to magnesium of 0.005:1 to 10:1.

The hydrocarbyl aluminum cocatalyst can be represented by the formula $R_3Al$ wherein each R is an alkyl, cycloalkyl, aryl, or hydride radical; at least one R is a hydrocarbyl radical; two or three R radicals can be joined in a cyclic radical forming a heterocyclic structure; each R can be alike or different; and each R, which is a hydrocarbyl radical, has 1 to 20 carbon atoms, and preferably 1 to 10 carbon atoms. Further, each alkyl radical can be straight or branched chain and such hydrocarbyl radical can be a mixed radical, i.e., the radical can contain alkyl, aryl, and/or cycloalkyl groups. Examples of suitable radicals are: methyl, ethyl, propyl, isopropyl, butyl, isobutyl, tert-butyl, pentyl, neopentyl, hexyl, 2-methylpentyl, heptyl, octyl, isooctyl, 2-ethylhexyl, 5,5-dimethylhexyl, nonyl, decyl, isodecyl, undecyl, dodecyl, phenyl, phenethyl, methoxyphenyl, benzyl, tolyl, xylyl, naphthyl, naphthal, methylnaphthyl, cyclohexyl, cycloheptyl, and cyclooctyl.

Examples of suitable hydrocarbyl aluminum compounds are as follows: triisobutylaluminum, trihexylaluminum, di-isobutylaluminum hydride, dihexylaluminum hydride, isobutylaluminum dihydride, hexylaluminum dihydride, di-isobutylhexylaluminum, isobutyl dihexylaluminum, trimethylaluminum, triethylaluminum, tripropylaluminum, triisopropylaluminum, tri-n-butylaluminum, trioctylaluminum, tridecylaluminum, tridodecylaluminum, tribenzylaluminum, triphenylaluminum, trinaphthylaluminum, and tritolylaluminum. The preferred hydrocarbyl aluminums are triethylaluminum, triisobutylaluminum, trihex-

EP 0 426 140 B1

ylaluminum, di-isobutylaluminum hydride, and dihexylaluminum hydride.

The useful silicon compounds include compounds having the formula $R_aSiY_bX_c$ wherein R is a hydrocarbon radical having 1 to 20 carbon atoms; Y is -OR or -OCOR; and X is hydrogen, chlorine, bromine, or iodine; each R and Y are the same or different; a is an integer from 0 to 3; b is an integer from 1 to 4; c is 0 or 1; and a + b + c = 4. R can be substituted or unsubstituted. Silicon compounds containing Si-O-Si groups can also be employed providing that at least one Si-O-C group is present. Mixtures of silicon compounds can also be used. Examples of useful silicon compounds are diphenyldimethoxysilane, n-propyltrimethoxysilane, di-tert-butyldimethoxysilane, diphenyldiisobutoxysilane, diisobutyldimethoxysilane, and dimethyldiethoxysilane.

The copolymer can be prepared in the gas phase in a single stage process generally, by continuously contacting at least the two monomers, propylene and 1-hexene, with the catalyst system in a single stage fluidized bed reactor such as that described in United States Patent 4,482,687. Any conventional gas phase reactor for the production of, for example, polypropylene or propylene copolymers can be used.

Other monomers can be included in the propylene/1-hexene copolymer. In this specification, the term "copolymer" is considered to mean a polymer based on two or more monomers. The additional monomers can be ethylene or alpha-olefins having 4 to 12 carbon atoms or conjugated or non-conjugated dienes containing 5 to 25 carbon atoms. Useful alpha-olefins preferably do not contain any branching on carbon atoms closer than two carbon atoms removed from the double bond. Examples of suitable alpha-olefins other than ethylene are 1-butene, 4-methylpentene-1, 1-heptene, and 1-octene. Examples of the dienes are 1,4-pentadiene, 1,4-hexadiene, 1,5-hexadiene, dicyclopentadiene, cyclohexadiene, 1-vinyl-1-cyclopentene, and the alkylbicyclononadienes, indenes, and norbornenes. Ethylidene norbornene is an example of the latter. The non-conjugated dienes are preferred. The preferred additional monomers are ethylene and 1-butene.

In the copolymer, the portion attributed to propylene is preferably in the range of 80 to 95 percent by weight based on the weight of the copolymer and is more preferably in the range of 85 to 95 percent by weight; the portion attributed to 1-hexene is preferably in the range of 5 to 20 percent by weight and is more preferably in the range of 5 to 15 percent by weight; and the portion attributed to other monomers, if any, is preferably in the range of 1 to 5 percent by weight. All percentages are based on the weight of the random copolymer.

The amount of 1-hexene incorporated into the copolymer, i.e., the portion of the copolymer based on 1-hexene, can be determined by carbon 13 nuclear magnetic resonance (NMR) spectroscopy. More simply, however, the weight percent of 1-hexene incorporated is linearly proportional to the 1-hexene to propylene gas phase molar ratio and can be calculated from this value.

Unlike other alpha-olefin random copolymers with propylene such as ethylene and 1-butene, which decrease the melting point and modulus as the comonomer content increases, propylene/1-hexene copolymers produced by this invention are found to retain a high melting point as comonomer content increases and modulus (stiffness) decreases.

The fluidized bed, or other gas phase, reactor is operated at a temperature in the range of 50°C to 90°C and preferably at a temperature in the range of 60°C to 80°C. The operating pressure is in the range of 1.480 to 4.238 MPa (200 to 600 psig) or higher and preferably 1.825 to 3.549 MPa (250 to 500 psig). The partial pressure of the propylene is in the range of 344.75 to 2758 KPa (50 to 400 psi) and is preferably 413 to 1517 KPa (60 to 220 psi). The partial pressure of 1-hexene is in the range of 6.9 to 103.4 KPa (1 to 15 psi) and is preferably 27.6 to 82.7 KPa (4 to 12 psi). The total partial pressure of other comonomers can be 0 to 344.75 (50 psi). The molar ratio of 1-hexene to propylene is 0.01 to 0.08 and is preferably 0.04 to 0.08. Most preferred is a 1-hexene to propylene molar ratio of 0.05 to 0.08. The preferred $C_6/C_3$ molar ratios provide a secant flexural modulus of less than about 689.500 MPa (100,000 psi) and the most preferred $C_6/C_3$ molar ratios provide a secant flexural modulus of less than about 517.125 MPa (75,000 psi), both in combination with the preferred propylene partial pressure of 413 to 1517 KPa (60 to 220 psi). The superficial gas velocity, which can be calculated by measuring cycle gas flow, is maintained in the range of 0.305 to 0.915 m/sec (1 to 3 feet per second) and is preferably in the range of 0.305 to 0.61 m/sec (1 to 2 feet per second). The superficial gas velocity is preferably used together with a slow transition in order to optimize the results. In other words, the 1-hexene concentration in the gas phase is increased slowly to the desired level for the product.

Hydrogen or another chain transfer agent can be used in the process. The molar ratio of hydrogen to propylene used in the fluidized bed reactor is in the range of zero to 0.3:1 and is preferably in the range of 0.001:1 to 0.2:1. This translates into a hydrogen partial pressure in the range of 0 to 552 KPa (80 psi) and preferably 0.34 to 552 KPa (0.05 to 80 psi). The balance of the operating pressure utilized in the reactor, i.e., after the partial pressure of propylene, 1-hexene, and, if used, other comonomers and the hydrogen

4

partial pressure are considered, can be made up by using an inert gas such as nitrogen.

In the process of this invention, the components of the catalyst system are maintained in an amount such that the atomic ratio of aluminum in the cocatalyst to silicon in the selectivity control agent is 0.5 to 10, and preferably is 1 to 5, and the atomic ratio of aluminum in the cocatalyst to titanium in the solid catalyst component is 10 to 300, and is preferably 20 to 100.

Melt flow can be in the range of 0.01 to 1000 and is preferably in the range of 0.05 to 500. Average particle size can be in the range of 12.7 to 1270 $\mu$m (0.005 to 0.5 inch) and is preferably in the range of 25.4 to 203.2 $\mu$m (0.01 to 0.08 inch). Settled bulk density can be in the range of 80.1 to 560.7 Kg/m$^3$ (5 to 35 pounds per cubic foot) and is preferably in the range of 160.2 to 400.5 Kg/m$^3$ (10 to 25 pounds per cubic foot).

N-hexane (at 50°C) extractables are preferably maintained at a level no higher than about 20 percent by weight based on the weight of the copolymer and is preferably kept at a level no higher than about 5.5 percent by weight.

The advantages of the invention lie in the product, which not only has improved clarity, low temperature impact strength, and melt sealing characteristics found, generally, in random propylene copolymers, but combines a high melting point together with low modulus, the preferred DSC melting point being at least about 140°C and the preferred secant flexural modulus being less than about 689.500 MPa (100,000 psi). herein.

The invention is illustrated by the following examples:

## Example 1

### Preparation of Solid Catalyst Component

To a solution of 70 milliliters of titanium tetrachloride (120 grams, 0.64 mol) in 3.7 liters of chlorobenzene are added, in succession, 180 milliliters of diisobutyl phthalate (187 grams, 0.67 mol), 590 grams (5.2 mols) of magnesium diethoxide, and a solution of 4.7 liters of titanium tetrachloride (8100 grams, 43 mols) in 1.2 liters of chlorobenzene. A temperature of 20°C to 25°C is maintained during these additions. The resulting mixture is then heated to 110°C with stirring, the temperature being maintained for 1 hour. At the end of this time, the mixture is filtered while hot. A solid material is collected.

The solid material is then slurried in a solution of 4.7 liters of titanium tetrachloride (8100 grams, 43 mols) in 1.2 liters of chlorobenzene at room temperature. A solution of 45 grams (0.22 mol) of phthaloyl dichloride in 3.7 liters of chlorobenzene is added to the slurry at room temperature, and the resulting slurry is then heated to 110°C with stirring, the temperature being maintained for 30 minutes. At the end of this time, the mixture is filtered while hot. A solid material is collected.

The solid material is reslurried in a solution of 4.7 liters of titanium tetrachloride (8100 grams, 43 mols) in 1.2 liters of chlorobenzene at room temperature. An additional 3.7 liters of chlorobenzene is then added to the slurry at room temperature, and the resulting slurry is heated to 110°C with stirring, the temperature being maintained in 30 minutes. At the end of this time, the mixture is filtered while hot. A solid material is collected.

The solid material is reslurried once again in a solution of 4.7 liters of titanium tetrachloride (8100 grams, 43 mols) in 1.2 liters of chlorobenzene at room temperature. An additional 3.2 liters of chlorobenzene is then added to the slurry at room temperature, and the resulting slurry is heated to 110°C with stirring, the temperature being maintained for 30 minutes. At the end of this time, the mixture is filtered while hot. The residue is washed 6 times with 500 milliliter portions of hexane at 25°C, and then dried under a nitrogen purge. The product weighs about 500 grams.

### Examples 2 to 8

The solid catalyst component prepared in Example 1 is continuously fed into a fluidized bed reactor as a 30 percent by weight dispersion in mineral oil. Simultaneously, and continuously, triethylaluminum cocatalyst dissolved in isopentane and a selectivity control agent also dissolved in isopentane are added to the reactor.

Sufficient solid catalyst component, cocatalyst, and selectivity control agent are introduced into the reactor to maintain the molar ratios of aluminum to selectivity control agent (SCA) and of triethylaluminum (TEAL) to titanium set forth in the Table.

Propylene, 1-hexene, hydrogen, and nitrogen are added to maintain a specified total pressure. The total pressure and partial pressures of propylene and 1-hexene are mentioned in the Table as well as the hydrogen/propylene molar ratio. The balance of the total pressure is made up with nitrogen. The resin product is transferred from the fluidized bed to a purge bin in which the resin flows downward by gravity and humidified nitrogen flows upward so that the contained moisture can deactivate the catalyst components in the resin to reduce odor.

The reactor is a pilot scale model, 35.6 cm (14 inches) in diameter and 8.5 m (28 feet) in height. It is operated in the condensing mode. Condensing mode operation is described in United States Patents 4,543,399 and 4,588,790 wherein the recycle gas stream is intentionally cooled to a temperature at or below the dew point of the recycle gas stream to produce a two-phase gas/liquid mixture under conditions such that the liquid phase of said mixture will remain entrained at least from the point of entry until it passes into the fluidized bed.

Examples 9 to 12

These are comparative examples using ethylene instead of 1-hexene as comonomer. Catalyst, catalyst handling, polymer production, and equipment are the same as in examples 2 to 8 except as noted in the Table.

Example 13

This comparative example illustrates homopolymer (zero percent comonomer) production carried out using the same steps and conditions as in examples 2 to 12 except as noted in the Table.

Variables and results are set forth in the Table.

TABLE

| Example | 2 | 3 | 4 | 5 | 6 | 7 | 8 | 9 | 10 | 11 | 12 | 13 |
|---|---|---|---|---|---|---|---|---|---|---|---|---|
| temperature (°C) | 80 | 65 | 80 | 80 | 80 | 80 | 80 | 80 | 80 | 70 | 80 | 80 |
| total pressure (psia) | 315 | 265 | 265 | 440 | 440 | 315 | 315 | 315 | 315 | 440 | 440 | 440 |
| propylene partial pressure (psi) | 158 | 100 | 69 | 377 | 377 | 238 | 212 | 84 | 159 | 106 | 181 | 374 |
| 1-hexene partial pressure (psi) | 8.2 | 6.6 | 4.2 | 9.3 | 11.2 | 11.0 | 8.4 | 4.5 | - | - | - | - |
| hydrogen partial pressure (psi) | 0.71 | 0.73 | 0.30 | 1.3 | 1.0 | 0.67 | 0.55 | 0.17 | 0.65 | 1.2 | 1.1 | 1.0 |
| hydrogen/propylene (molar ratio) | 0.0045 | 0.0073 | 0.0044 | 0.0035 | 0.0027 | 0.0028 | 0.0026 | 0.0020 | 0.0041 | 0.0116 | 0.0063 | 0.0028 |
| ethylene/propylene (molar ratio) | - | - | - | - | - | - | - | - | 0.033 | 0.041 | 0.043 | - |
| 1-hexene/propylene (molar ratio) | 0.052 | 0.069 | 0.061 | 0.025 | 0.030 | 0.046 | 0.040 | 0.054 | - | - | - | - |
| superficial gas velocity (ft/sec) | 1.5 | 2.0 | 2.0 | 1.1 | 1.1 | 1.5 | 1.5 | 1.5 | 1.5 | 1.1 | 1.2 | 1.1 |

TABLE (continued)

| Example | 2 | 3 | 4 | 5 | 6 | 7 | 8 | 9 | 10 | 11 | 12 | 13 |
|---|---|---|---|---|---|---|---|---|---|---|---|---|
| SCA type | DIBDMS | DIBDMS | DIBDMS | DPDMS | DPDMS | DPDMS | DPDMS | NPTMS | DPDMS | DIBDMS | DIBDMS | DIBDMS |
| Al/Ti (molar ratio) | 69.7 | 74.3 | 28.9 | 75.1 | 70.8 | — | — | 22.0 | 61 | 39.3 | 177 | 43 |
| Al/SCA (molar ratio) | 1.9 | 1.7 | 1.7 | 2.8 | 3.7 | 2.7 | 3.6 | 1.7 | 2.9 | 2.2 | 2.1 | 2.3 |
| melt flow (g/10 min) | 5.7 | 5 | 6.2 | 4.8 | 3.9 | 3.8 | 3.4 | 0.07 | 4.5 | 4.9 | 4.8 | 3.5 |
| bulk density (lbs/cu ft) | 12.4 | 10 | 10.5 | 19.3 | 17.8 | 17.8 | 17.4 | 12.6 | 23 | 20.2 | 15.7 | 22.4 |
| APS (inch) | 0.076 | 0.1 | 0.082 | 0.025 | 0.034 | 0.062 | 0.050 | — | 0.028 | 0.032 | 0.12 | 0.01 |
| Ti (ppmw) | 2.4 | 2.1 | 6.0 | 0.94 | 0.98 | — | — | 9.4 | 1.8 | 2.3 | 1.2 | — |
| DSC MP (°C) | 143 | 140 | 146 | 150 | 148 | 144 | 145 | 148 | 139 | 131 | 126 | 164 |
| N-Hexene extractables (%) | 4.7 | 7 | — | 0.7 | 0.8 | 1 | 0.6 | — | 2.26 | 3.2 | 4.2 | — |
| 1% SFM (k psi) | 54 | 44 | 39 | 130 | 123 | 91 | 107 | 60 | 101 | 73 | 57 | 199 |
| 1-Hexene content (% by wt) | 11.5 | 14.6 | 13.5 | 5.5 | 6.6 | 10.3 | 8.8 | 11.9 | — | — | — | — |
| Ethylene Content (% by wt) | — | — | — | — | — | — | — | — | 5.0 | 6.5 | 7.7 | — |

Notes with respect to the Table:

1.  DIBDMS = diisobutyldimethoxysilane
    DPDMS = diphenyldimethoxysilane
    NPTMS = n-propyltrimethoxysilane

2.  Melt flow is determined under ASTM D-1238, Condition L, measured at 230°C with a 2160 gram load, and reported as grams per 10 minutes (g/10 min).

3.  Bulk density can be referred to as settled bulk density and is determined as follows: a resin sample of a fixed volume is collected and weighed. Bulk density is calculated by dividing the weight by the volume. It is reported in pounds per cubic foot (lbs/cu ft).

4.  APS (inch) is average particle size. It is determined by passing the resin particles through a series of ASTM standard sieves, weighing the retained particles on each sieve, and calculating the number average particle size in inches.

5.  Ti (ppmw) is parts per million by weight based on the weight of the total resin. The titanium is determined by the spectrophotometric method.

6.  DSC MP (°C) is the DSC melting point in °C as determined by heating a small sample of resin in a differential scanning calorimeter at a constant rate, cooling at a constant rate, and reheating at a constant rate. The constant rate is 10°C per minute.

7.  N-hexane extractables are the percent by weight of hexane extractables determined as

follows: a film sample of the copolymer 3 to 4 mils in thickness (prepared by chill roll extrusion) is extracted at 50°C in n-hexane for 2 hours and then filtered. The filtrate is evaporated and the total residue weighed as a measure of the n-hexane extractable fraction.

8. 1% SFM is the secant flexural modulus, a measure of stiffness. It is defined as the slope of the stress-strain line at one percent strain. The unit is kpsi (kpsi = 1000 pounds per square inch). 1% SFM is determined according to ASTM D-790 at a strain rate of 0.05 inch per minute.

9. 1-Hexene content is calculated from monomer feed ratios or measured by C13 NMR.

10. Ethylene content is determined by DSC melting point depression.

11. The conversion factors for converting non-metric units into SI units are as follows:

$$1 \text{ psi} = 6.895 \text{ kPa}$$
$$1 \text{ ft/sec} = 0.3048 \text{ m/sec}$$
$$1 \text{ lb/cu ft} = 16.0185 \text{ kg/m}^3$$
$$1 \text{ inch} = 2.54 \text{ cm}$$
$$1 \text{ mil} = 25.4 \text{ } \mu\text{m}$$

**Claims**

1. A process for the copolymerization of a mixture of monomers comprising propylene and 1-hexene which comprises contacting the monomers and, optionally, hydrogen in the gas phase in a single stage reaction zone, under polymerization conditions, with a catalyst system comprising (i) a solid catalyst precursor, which includes magnesium; titanium; a halogen which is chlorine, bromine, or iodine, or a mixture thereof; and a polycarboxylic acid ester containing two coplanar ester groups attached to adjacent carbon atoms; (ii) a hydrocarbyl aluminum cocatalyst; and (iii) a silicon compound containing at least one silicon-oxygen-carbon group, at a temperature of from 50°C to 90°C, wherein:
   (a) the atomic ratio of aluminum to titanium is in the range of 10 to 300;
   (b) the molar ratio of aluminum to silicon compound is in the range of 0.5 to 10;
   (c) the propylene partial pressure is in the range of 344.75 to 2758 KPa (50 to 400 psi);
   (d) the 1-hexene partial pressure is in the range of 6.9 to 103.4 KPa (1 to 15 psi);
   (e) if hydrogen is present, the hydrogen partial pressure is in the range of up to about 552 KPa (80 psi);
   (f) the superficial gas velocity is in the range of 0.305 to 0.915 m/sec (1 to 3 feet per second); and
   (g) the molar ratio of 1-hexene to propylene is in the range of 0.01:1 to 0.08:1.

2. The process defined in claim 1 wherein the atomic ratio of aluminum to titanium is in the range of 20 to 100.

3. The process defined in claim 1 or 2 wherein the molar ratio of aluminum to silicon compound is in the range of 1 to 5.

4. The process defined in any of claims 1-3 wherein the temperature is in the range of 60°C to 80°C.

5. The process defined in any of claims 1-4 wherein the propylene partial pressure is in the range of 413 to 1517 KPa (60 to 220 psi).

6. The process defined in any of claims 1-5 wherein the 1-hexene partial pressure is in the range of 27.6 to 82.7 KPa (4 to 12 psi).

7. The process as defined in any of claims 1-6 wherein the hydrogen partial pressure is in the range of 0.34 to 552 KPa (0.05 psi to 80 psi).

8. The process defined in claims 1-7 wherein the superficial gas velocity is in the range of 0.305 to 0.61 m/sec (1 to 2 feet per second).

9. The process as defined in any of claims 1-8 wherein the molar ratio of 1-hexene to propylene is in the range of 0.04:1 to 0.08:1.

10. The process defined in any of claims 1-9 wherein the process is carried out continuously and in a fluidized bed.

11. The process defined in any of claims 1-10 wherein the solid catalyst precursor is obtained by halogenating a magnesium compound having the formula MgRR', wherein R is an alkoxide or aryloxide group and R' is R or halogen, with a halogenated tetravalent titanium compound containing at least two halogen atoms, in the presence of a halohydrocarbon and a polycarboxylic acid ester containing two coplanar ester groups attached to adjacent carbon atoms.

12. The process defined in claim 11 wherein the magnesium compound is magnesium diethoxide, the halogenated tetravalent titanium compound is titanium tetrachloride, the halohydrocarbon is chlorobenzene, and the polycarboxylic acid ester is diisobutyl phthalate.

13. The process defined in any of claims 1-12 wherein the hydrocarbyl aluminum cocatalyst is a trialkylaluminum.

14. The process defined in any of claims 1-13 wherein the silicon compound has the formula

$R_aSiY_bX_c$

wherein R is a hydrocarbyl having 1 to 20 carbon atoms; Y is -OR or -OCOR; and X is hydrogen, chlorine, bromine, or iodine; each R and Y are the same or different; a is an integer from 0 to 3; b is an integer from 1 to 4; c is 0 or 1; and a + b + c = 4.

15. The process defined in any of claims 1-14 wherein the silicon compound is diphenyldimethoxysilane, di-isobutyldimethoxysilane or n-propyltrimethoxysilane.

**Patentansprüche**

1. Verfahren zur Copolymerisation einer Mischung von Propylen und 1-Hexen umfassenden Monomeren, umfassend das Inkontaktbringen der Monomeren und, gegebenenfalls, von Wasserstoff in der Gasphase in einer einstufigen Reaktionszone unter Polymerisationsbedingungen mit einem Katalysatorsystem, welches umfaßt (i) einen festen Katalysator-Vorläufer, der Magnesium; Titan; ein Halogen, das Chlor, Brom oder Iod oder eine Mischung davon ist; und einen zwei coplanare Estergruppen, die sich an benachbarten Kohlenstoffatomen befinden, enthaltenden Polycarbonsäureester einschließt; (ii) einen Hydrocarbylaluminium-Cokatalysator; und (iii) eine Siliciumverbindung, die mindestens eine Silicium-Sauerstoff-Kohlenstoff-Gruppe enthält, bei einer Temperatur von 50°C bis 90°C, wobei:

(a) das Atomverhältnis von Aluminium zu Titan im Bereich von 10 bis 300 liegt;

(b) das Molverhältnis von Aluminium zu Siliciumverbindung im Bereich von 0,5 bis 10 liegt;

(c) der Propylen-Partialdruck im Bereich von 344,75 bis bis 2758 KPa (50 bis 400 psi) liegt;

(d) der 1-Hexen-Partialdruck im Bereich von 6,9 bis 103,4 KPa (1 bis 15 psi) liegt;

(e) falls Wasserstoff anwesend ist, der Wasserstoff-Partialdruck im Bereich von bis zu etwa 552 KPa (80 psi) liegt;

(f) die Oberflächen-Gasgeschwindigkeit im Bereich von 0,305 bis 0,915 m/Sek. (1 bis 3 Fuß pro Sekunde) liegt; und

(g) das Molverhältnis von 1-Hexen zu Propylen im Bereich von 0,01:1 bis 0,08:1 liegt.

2. Verfahren nach Anspruch 1, in welchem das Atomverhältnis von Aluminium zu Titan im Bereich von 20 bis 100 liegt.

3. Verfahren nach Anspruch 1 oder 2, in welchem das Molverhältnis von Aluminium zu Siliciumverbindung im Bereich von 1 bis 5 liegt.

4. Verfahren nach irgendeinem der Ansprüche 1 - 3, in welchem die Temperatur im Bereich von 60°C bis 80°C liegt.

5. Verfahren nach irgendeinem der Ansprüche 1 - 4, in welchem der Propylen-Partialdruck im Bereich von 413 bis 1517 KPa (60 bis 220 psi) liegt.

6. Verfahren nach irgendeinem der Ansprüche 1 - 5, in welchem der 1-Hexen-Partialdruck im Bereich von 27,6 bis 82,7 KPa (4 bis 12 psi) liegt.

7. Verfahren nach irgendeinem der Anprüche 1 - 6, in welchem der Wasserstoff-Partialdruck im Bereich von 0,34 bis 552 KPa (0,05 psi bis 80 psi) liegt.

8. Verfahren nach irgendeinem der Ansprüche 1 - 7, in welchem die Oberflächen-Gasgeschwindigkeit im Bereich von 0,305 bis 0,61 m/Sek. (1 bis 2 Fuß pro Sekunde) liegt.

9. Verfahren nach irgendeinem der Ansprüche 1 - 8, in welchem das Molverhältnis von 1-Hexen zu Propylen im Bereich von 0,04:1 bis 0,08:1 liegt.

10. Verfahren nach irgendeinem der Ansprüche 1 - 9, das kontinuierlich in einem Fließbett durchgeführt wird.

11. Verfahren nach irgendeinem der Ansprüche 1 - 10, in welchem der feste Katalysator-Vorläufer erhalten wird durch Halogenierung einer Magnesiumverbindung mit der Formel MgRR', worin R eine Alkoxid- oder Aryloxidgruppe ist und R' R oder Halogen darstellt, mit einer vierwertigen halogenierten Titanverbindung, die mindestens zwei Halogenatome enthält, in Anwesenheit eines Halogenkohlenwasserstoffes und eines Polycarbonsäureesters, der zwei coplanare Estergruppen enthält, die sich an benachbarten Kohlenstoffatomen befinden.

12. Verfahren nach Anspruch 11, in welchem die Magnesiumverbindung Magnesiumdiethoxid ist, die vierwertige halogenierte Titanverbindung Titantetrachlorid ist, der Halogenkohlenwasserstoff Chlorbenzol ist und der Polycarbonsäureester Diisobutylphthalat ist.

13. Verfahren nach irgendeinem der Ansprüche 1 - 12, in welchem der Hydrocarbylaluminium-Cokatalysator ein Trialkylaluminium ist.

14. Verfahren nach irgendeinem der Ansprüche 1 - 13, in welchem die Siliciumverbindung die Formel

$R_aSiY_bX_c$

aufweist, worin R ein Kohlenwasserstoffrest mit 1 bis 20 Kohlenstoffatomen ist; Y für -OR oder -OCOR steht; und X Wasserstoff, Chlor, Brom oder Iod bedeutet; R und Y jeweils gleich oder verschieden sind; a eine ganze Zahl von 0 bis 3 ist; b eine ganze Zahl von 1 bis 4 ist; c 0 oder 1 ist; und a + b + c = 4.

15. Verfahren nach irgendeinem der Ansprüche 1 - 14, in welchem die Siliciumverbindung Diphenyldimethoxysilan, Diisobutyldimethoxysilan oder n-Propyltrimethoxysilan ist.

## Revendications

1. Procédé de copolymérisation d'un mélange de monomères comprenant du propylène et du 1-hexène, qui comprend la mise en contact des monomères et, facultativement, d'hydrogène en phase gazeuse dans une zone réactionnelle à un seul étage, dans des conditions de polymérisation, avec une formulation de catalyseur comprenant (i) un précurseur de catalyseur solide, qui comprend du magnésium ; du titane ; un halogène qui est le chlore, le brome ou l'iode, ou un de leurs mélanges ; et un ester d'un polymère d'acide carboxylique contenant deux groupes ester coplanaires fixés à des atomes de carbone adjacents ; (ii) un cocatalyseur du type hydrocarbylaluminium ; et (iii) un composé de silicium contenant au moins un groupe silicium-oxygène-carbone, à une température comprise dans l'intervalle de 50°C à 90°C, dans lequel :
   (a) le rapport atomique de l'aluminium au titane est compris dans l'intervalle de 10 à 300 ;
   (b) le rapport molaire de l'aluminium au composé de silicium est compris dans l'intervalle de 0,5 à 10 ;
   (c) la pression partielle de propylène est comprise dans l'intervalle de 344,75 à 2758 kPa (50 à 400 psi) ;
   (d) la pression partielle de 1-hexène est comprise dans l'intervalle de 6,9 à 103,4 kPa (1 à 15 psi) ;
   (e) si de l'hydrogène est présent, la pression partielle d'hydrogène est égale à une valeur allant jusqu'à environ 552 kPa (80 psi) ;
   (f) la vitesse superficielle du gaz est comprise dans l'intervalle de 0,305 à 0,915 m/s (1 à 3 ft par seconde) ; et
   (g) le rapport molaire du 1-hexène au propylène est compris dans l'intervalle de 0,01:1 à 0,08:1.

2. Procédé suivant la revendication 1, dans lequel le rapport atomique de l'aluminium au titane est compris dans l'intervalle de 20 à 100.

3. Procédé suivant la revendication 1 ou 2, dans lequel le rapport molaire de l'aluminium au composé de silicium est compris dans l'intervalle de 1 à 5.

4. Procédé suivant l'une quelconque des revendications 1 à 3, dans lequel la température est comprise dans l'intervalle de 60°C à 80°C.

5. Procédé suivant l'une quelconque des revendications 1 à 4, dans lequel la pression partielle de propylène est comprise dans l'intervalle de 413 à 1517 kPa (60 à 220 psi).

6. Procédé suivant l'une quelconque des revendications 1 à 5, dans lequel la pression partielle de 1-hexène est comprise dans l'intervalle de 27,6 à 82,7 kPa (4 à 12 psi).

7. Procédé suivant l'une quelconque des revendications 1 à 6, dans lequel la pression partielle d'hydrogène est comprise dans l'intervalle de 0,34 à 552 kPa (0,05 psi à 80 psi).

8. Procédé suivant les revendications 1 à 7, dans lequel la vitesse superficielle du gaz est comprise dans l'intervalle de 0,305 à 0,61 m/s (1 à 2 ft/s).

9. Procédé suivant l'une quelconque des revendications 1 à 8, dans lequel le rapport molaire du 1-hexène au propylène est compris dans l'intervalle de 0,04:1 à 0,08:1.

10. Procédé suivant l'une quelconque des revendications 1 à 9, qui est mis en oeuvre de manière continue et dans un lit fluidisé.

11. Procédé suivant l'une quelconque des revendications 1 à 10, dans lequel le précurseur de catalyseur solide est obtenu par halogénation d'un composé de magnésium répondant à la formule MgRR', dans laquelle R représente un groupe alcoxyde ou aryloxyde et R' représente R ou un halogène, avec un composé de titane tétravalent halogéné contenant au moins deux atomes d'halogènes, en présence d'un hydrocarbure halogéné et d'un ester de polymère d'acide carboxylique contenant deux groupes ester coplanaires fixés à des atomes de carbone adjacents.

12. Procédé suivant la revendication 11, dans lequel le composé de magnésium est le diéthylate de magnésium, le composé de titane tétravalent halogéné est le tétrachlorure de titane, l'hydrocarbure halogéné est le chlorobenzène, et l'ester de polymère d'acide carboxylique est le phtalate de diisobutyle.

13. Procédé suivant l'une quelconque des revendications 1 à 12, dans lequel le cocatalyseur du type hydrocarbylaluminium est un trialkylaluminium.

14. Procédé suivant l'une quelconque des revendications 1 à 13, dans lequel le composé de silicium répond à la formule

$$R_aSiY_bX_c$$

dans laquelle R représente un groupe hydrocarbyle ayant 1 à 20 atomes de carbone ; Y représente un groupe -OR ou -OCOR ; et X représente l'hydrogène, le chlore, le brome ou l'iode ; les groupes R ainsi que les groupes Y étant identiques ou différents ; a représente un nombre entier de 0 à 3 ; b représente un nombre entier de 1 à 4 ; c est égal à 0 ou 1 ; et la somme a + b + c est égale à 4.

15. Procédé suivant l'une quelconque des revendications 1 à 14, dans lequel le composé de silicium est le diphényldiméthoxysilane, le diisobutyldiméthoxysilane ou le n-propyltriméthoxysilane.